# EUROPÄISCHE PATENTANMELDUNG

(11) **EP 2 657 083 A2**
(43) Veröffentlichungstag der Anmeldung: **30.10.2013**
(21) Anmeldenummer: 13001142.2
(22) Anmeldetag: 07.03.2013
(51) Int. Cl.: B60Q 3/02, F21V 7/00, F21V 7/04, F21Y 101/02

(54) **Leuchte für die Innenbeleuchtung eines Fahrzeuges mit einem Hauptreflektor und einen Hilfsreflektor**

(30) Priorität: 25.04.2012 DE 202012004143 U
(71) Anmelder: Truck-Lite Europe GmbH, 99817 Eisenach (DE)
(72) Erfinder: Marschall, Hartmut, 99817 Eisenach/OT Neuenhof (DE)
(74) Vertreter: Strasser, Wolfgang

(57) **Zusammenfassung**

Eine Leuchte (1) für die Innenbeleuchtung eines Fahrzeuges, insbesondere eines Kraftfahrzeuges, umfasst folgende Bestandteile: ein Gehäuse (3), das einen eine Lichtdurchtrittsöffnung (14) aufweisenden Hohlraum (4) umschließt, eine im Hohlraum des Gehäuses angeordnete Lichtquelle, und eine im Hohlraum des Gehäuses angeordnete Reflektoranordnung, die das Licht der Lichtquelle so reflektiert, dass es durch die Lichtdurchtrittsöffnung des Hohlraums nach außen tritt, und wobei die Reflektoranordnung einen Hauptreflektor (9) und einen Hilfsreflektor (11) umfasst, dass die Lichtquelle so angeordnet ist, dass ihr Licht im Wesentlichen vollständig auf den Hilfsreflektor trifft und von diesem quer zu seiner bisherigen Ausbreitungsrichtung auf den Hauptreflektor hin umgelenkt wird, und dass das auf den Hauptreflektor auftreffende Licht von diesem erneut quer zu seiner nunmehrigen Ausbreitungsrichtung so umgelenkt wird, dass es durch die Lichtdurchtrittsöffnung hindurch tritt.

## Beschreibung

Die Erfindung betrifft eine Leuchte für die Innenbeleuchtung eines Fahrzeuges, insbesondere eines Kraftfahrzeuges gemäß dem Oberbegriff von Anspruch 1.

Solche Leuchten kommen häufig als Kleinleuchten für verschiedenste Einsatzzwecke in Fahrzeuginnenräumen zur Anwendung, so z.B. als Make-up-Leuchten, Handschuhfach-Leuchten, Gepäckfach-Leuchten, Ambiente-Leuchten, Fußraum-Leuchten, Fond-Leuchten usw.

Allen diesen Leuchten ist gemeinsam, dass sie ein Gehäuse aufweisen, dessen Innenhohlraum über eine Lichtdurchtrittsöffnung mit der Außenseite verbunden ist. Im Hohlraum des Gehäuses sind eine Lichtquelle und eine Reflektoranordnung positioniert, wobei letztere dazu dient, das oder die von der Lichtquelle ausgehenden Lichtbündel optisch so zu beeinflussen, dass eine möglichst gleichförmige Ausleuchtung der Lichtdurchtrittsöffnung und einer sie verschließenden Lichtscheibe erzielt wird.

In jüngster Zeit werden in zunehmendem Maß Leuchten der eben geschilderten Art nachgefragt, die im Vergleich zur Größe ihrer im Allgemeinen ebenen Lichtscheibe eine sehr kleine Bautiefe aufweisen. Somit können nur wenig gekrümmte Reflektoranordnungen verwendet werden, die nicht in der Lage sind, einen von einer Lichtquelle ausgehenden Lichtkegel mit kleinem Öffnungswinkel so zu verbreitern, dass im Bereich der Lichtdurchtrittsöffnung bzw. der Lichtscheibe die erforderliche homogene Leuchtdichte erzielt wird. Es müssen daher Lichtquellen verwendet werden, die ihr Licht in einen sehr weiten Raumwinkel hinein abstrahlen, was insbesondere dann, wenn Leuchtdioden zum Einsatz kommen, mit erhöhten Bauteilekosten verbunden ist.

Somit liegt der Erfindung die Aufgabe zugrunde, eine Leuchte der eingangs beschriebenen Art zu schaffen, die eine im Vergleich zur Größe der Fläche ihrer Lichtscheibe geringe Bautiefe aufweist und bei der eine gleichförmige Ausleuchtung der Lichtdurchtrittsöffnung auch dann möglich ist, wenn als Lichtquelle standardmäßige Leuchtdioden Verwendung finden, die einen Abstrahlkegel mit kleinem Öffnungswinkel besitzen.

Zur Lösung dieser Aufgabe sieht die Erfindung die im Anspruch 1 niedergelegten Merkmale vor.

Der dort beschriebenen Anordnung liegt die Idee zugrunde, durch eine zweifache, im Allgemeinen nahezu im rechten Winkel erfolgende Umlenkung des oder der von der Lichtquelle ausgehenden Lichtbündel im Gehäuseinneren trotz der niederen Bauform einen ausreichend langen Strahlengang zu erzeugen, an dessen Ende das oder die Lichtbündel genügend stark aufgeweitet ist bzw. sind, um die Lichtdurchtrittsöffnung und mit ihr die Lichtscheibe gleichförmig auszuleuchten.

Zusätzlich zu dem langen Strahlengang wird dies dadurch erreicht, dass jeder der beiden Reflektoren eine in zwei zueinander senkrechten Richtungen gekrümmte Spiegelfläche aufweist, wobei die Spiegelfläche des Hauptreflektors in Richtung zur Lichtdurchtrittsöffnung hin und die des Hilfsreflektors sowohl zur Lichtquelle als auch zum Hauptreflektor hin konkav ausgebildet ist. Es kann sich dabei um teilparabolische oder an den jeweiligen Anwendungsfall angepasste, berechnete Freiflächen handeln.

Die Lichtquelle besteht vorzugsweise aus wenigstens einer Leuchtdiode.

Umfasst die Lichtquelle mehrere Leuchtdioden, so kann vorteilhafter Weise vorgesehen sein, dass der Hilfsreflektor mehrere Kalotten aufweist, von denen jeweils eine einer der Leuchtdioden zugeordnet ist.

Ein besonderer Vorteil ist darin zu sehen, dass die Reflektoren mit dem Gehäuse einstückig so ausgebildet werden können, dass die Reflektoren Teile der Hohlraum-Innenwände bilden. Dies bietet den fertigungstechnischen Vorteil, dass die gesamte Gehäuse-Innenseite in einem einzigen Arbeitsschritt durch Bedampfung verspiegelt werden kann.

Die wesentlichsten Vorteile einer erfindungsgemäßen Leuchte bestehen darin, dass sie sehr wenige Bauteile umfasst, dass die Lichtquelle nicht direkt sichtbar ist, keine zusätzlichen Lichtleitelemente benötigt werden und für die Reflektoren keine Arbeitsgänge für die Montage und Justierung erforderlich sind.

Diese und weitere vorteilhafte Ausgestaltungen einer erfindungsgemäßen Leuchte sind in den Unteransprüchen niedergelegt.

Die Erfindung wird im Folgenden anhand von Ausführungsbeispielen unter Bezugnahme auf die Zeichnung beschrieben; in dieser zeigen:
- Fig. 1: eine Draufsicht auf eine erste Ausführungsform einer erfindungsgemäßen Leuchte,
- Fig. 2: einen Schnitt durch die Leuchte aus Fig. 1 längs der Linie I-I in vergrößertem Maßstab,
- Fig. 3: eine perspektivische Ansicht der Leuchte aus den Figuren 1 und 2,
- Fig. 4: in stark vergrößertem Maßstab einen Querschnitt durch die Leuchte aus Fig. 2 in Richtung der Pfeile IV-IV gesehen,
- Fig. 5: in stark vergrößertem Maßstab einen Querschnitt durch die Leuchte aus Fig. 2 in Richtung der Pfeile V-V gesehen,
- Fig. 6: eine der Fig. 1 entsprechende Draufsicht auf eine weitere Ausführungsform einer erfindungsgemäßen Leuchte,
- Fig. 7: einen der Fig. 2 entsprechenden Längsschnitt durch die Leuchte aus Fig. 6; und
- Fig. 8: eine der Fig. 3 entsprechende, perspektivische Ansicht der Leuchte aus den Figuren 6 und 7.

In den Figuren sind gleiche bzw. einander entsprechende Teile mit den gleichen Bezugszeichen versehen. Soweit Richtungsangaben wie "oben", "unten", "links", "rechts" bzw. "vorne" oder "hinten" verwendet werden, beziehen sich diese ausschließlich auf die jeweilige Zeichnungsfigur und definieren keinesfalls Einbaulagen der erfindungsgemäßen Leuchten im Inneren eine Fahrzeuges, bei denen beispielsweise in den Figuren oben liegende Teile vertikal oder schräg nach unten oder zur Seite gerichtet sein können.

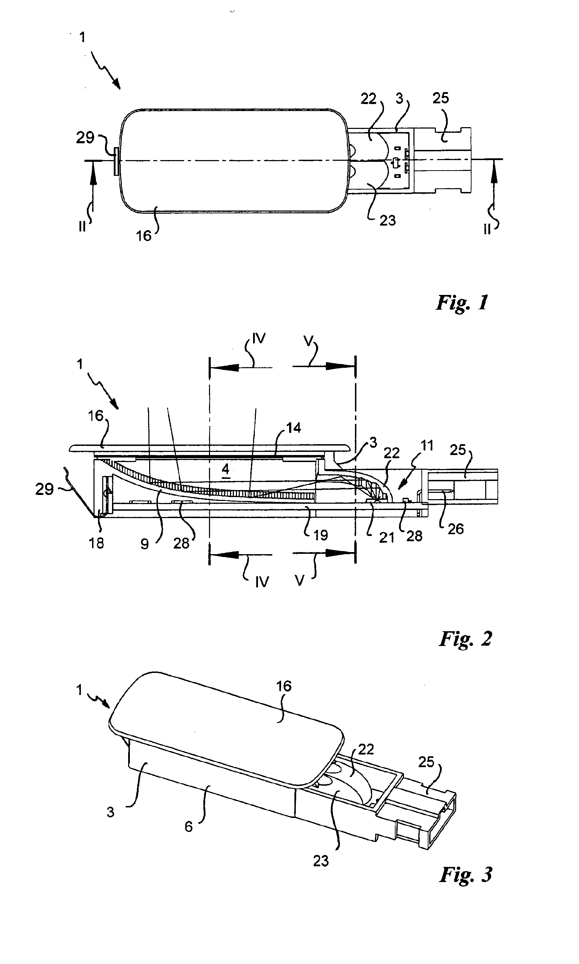

Die in den Figuren 1 bis 5 dargestellte Leuchte 1 besitzt ein Gehäuse 3, das im Wesentlichen die Form eines länglichen Quaders aufweist und einen Hohlraum 4 umschließt, der einerseits von den Längs-Seitenwänden 6,7 des Gehäuses 3 und andererseits von einem Hauptreflektor 9 und einem Hilfsreflektor 11 begrenzt wird, die mit dem Gehäuse 3 einstückig ausgebildet sind und deren Form und Lage im Folgenden noch genauer beschrieben wird.

In dem in den Figuren 1 bis 3 linken, lang gestreckten und etwas höheren Bereich des Gehäuses 3 ist der Hohlraum 4 oben offen. Die so gebildete Lichtdurchtrittsöffnung 14 ist im zusammengebauten Zustand durch eine Lichtscheibe 16 verschlossen, die mit dem Gehäuse 3 auf herkömmliche Weise, beispielsweise durch Verschweißen, verbunden sein kann. Die Lichtscheibe 16 kann klar oder milchig transparent sein und fakultativ (nicht dargestellte) optisch wirksame Strukturen, wie z.B. Streu- und/oder Sammel-Linsen oder richtungsverändernde Prismen aufweisen.

Im linken Bereich des Hohlraums 4 werden der Boden und die linke Stirnwand von dem bereits erwähnten Hauptreflektor 9 gebildet. Dieser erstreckt sich in etwa parabolisch ansteigend von einem Bereich, in welchem er einen maximalen Abstand von der Ebene der Lichtdurchtrittsöffnung 14 besitzt, in Längsrichtung bis zur linken Schmalseite des Hohlraumes 4 derart, dass er kontinuierlich bis zur Oberkante der linken Stirnwand 18 des Gehäuses 3 ansteigt, mit der er in diesem Bereich verbunden ist.

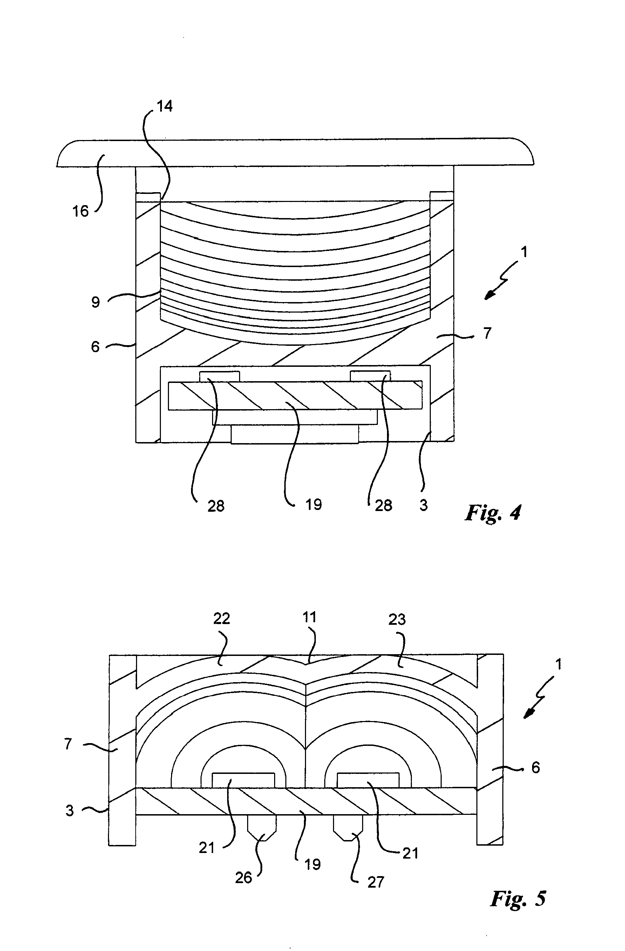

Wie man insbesondere der Figur 4 entnimmt, ist der Hauptreflektor 9 auch in Querrichtung des Gehäuses gekrümmt. Seine somit in zwei zueinander senkrechten Richtungen konkave Oberfläche ist der Lichtdurchtrittsöffnung 14 bzw. der diese überdeckenden Lichtscheibe 16 zugewandt.

Der Hohlraum 4 setzt sich über das rechte Ende des Hauptreflektors 9 hinaus mit einer etwas geringeren lichten Höhe fort. Auch in diesem Bereich wird er von den Längs-Seitenwänden 6,7 des Gehäuses 3 begrenzt. Die Unterseite des niedrigeren Teils des Hohlraumes 4 ist durch eine von unten her zwischen die Seitenwände des Gehäuses 3 eingeführte Leiterplatte 19 verschlossen, die auf Ihrer Oberseite die Lichtquelle 20 der Leuchte 1 trägt.

Bei dem gezeigten Ausführungsbeispiel wird die Lichtquelle 20 von zwei in Blickrichtung der Figur 2 hintereinander angeordneten Leuchtdioden 21 gebildet, von denen nur das hinter der Schnittebene liegende Bauelement sichtbar ist.

Die rechte Stirnwand des niedrigeren Teils des Hohlraums 4 wird von dem bereits erwähnten Hilfsreflektor 11 gebildet, der zwei einstückig miteinander verbundene Kalotten 22, 23 umfasst, von jede jeweils einer der beiden Leuchtdioden 21 zugeordnet ist. Die beiden Kalotten 22, 23 sind so gekrümmt, dass sie hier auch die obere Wand des Hohlraums 4 bilden. Sie weisen somit mit ihrer konkaven Seite sowohl nach unten zu den Leuchtdioden 21 hin als auch nach links zum Hauptreflektor 9.

Wie sich insbesondere der Fig. 5 entnehmen lässt, sind die beiden Kalotten 22, 23 auch in Querrichtung des Gehäuses 3 gekrümmt.

Eine das Gehäuses 3 nach rechts hin fortsetzende Steckeranordnung 25, mit deren Hilfe die Leuchte 1 an eine Stromquelle angeschlossen werden kann, umfasst zwei rechtwinklig abgebogene Anschlussstifte 26, 27, die durch die Leiterplatte 19 hindurch ragen und dort mit Leiterbahnen verlötet sind, die für die Stromversorgung der Leuchtdioden 21,21 sowie weiterer elektronischer Bauteile 28 dienen, die für die Funktion der Leuchte 1 vorgesehen sind, und von der Leiterplatte 19 getragen werden.

Wie man der Figur 2 entnimmt, trifft jeder der von den beiden Leuchtdioden 21 zunächst vertikal nach oben ausgehenden Lichtkegel auf die zugehörige Kalotte 22 bzw. 23 und wird von dieser quer zu seiner ursprünglichen Ausbreitungsrichtung, beim vorliegenden Ausführungsbeispiel nahezu im rechten Winkel nach links umgelenkt, wobei eine Bündelung eines jeden dieser Lichtkegel in der Weise erfolgt, dass sie ohne Verluste durch die Apperturblende hindurch treten können, die von dem Übergang zwischen dem rechts befindlichen niedrigen Teil des Hohlraumes 4 und dessen linken, höheren Teil gebildet wird. Hinter diesem Durchgang erweitern sich die beiden Lichtkegel wieder und treffen auf den Hauptreflektor 9, der sie nochmals in etwa im rechten Winkel so umlenkt, dass sie nach oben durch die Lichtscheibe 16 hindurch und in etwa parallel zu der Richtung austreten, mit der sie ursprünglich von ihren zugehörigen Leuchtdioden 21 abgegeben worden waren. Dabei ist die gesamte Anordnung so getroffen, dass die Lichtscheibe 16 im Bereich der Lichtdurchtrittsöffnung 14 mit einer möglichst homogenen Leuchtdichte ausgeleuchtet ist.

An der linken Schmalseite des Gehäuses 3 ist eine Federlasche 29 vorgesehen, mit deren Hilfe die Leuchte 1 an ihrem Einbauort verrastet werden kann.

Wie man sieht, besitzt die erfindungsgemäße Leuchte 1 im Vergleich zur Größe der Lichtdurchtrittsöffnung 14 eine außerordentlich niedrige Bauform. Durch die beschriebene Bauform wird im Inneren der Leuchte ein ausreichend langer Strahlengang erzielt, der es ermöglicht, die Lichtkegel so stark aufzuweiten, dass die erforderliche homogene Ausleuchtung der Lichtdurchtrittsöffnung 14 und der über ihr liegenden Lichtscheibe 16 erreicht wird.

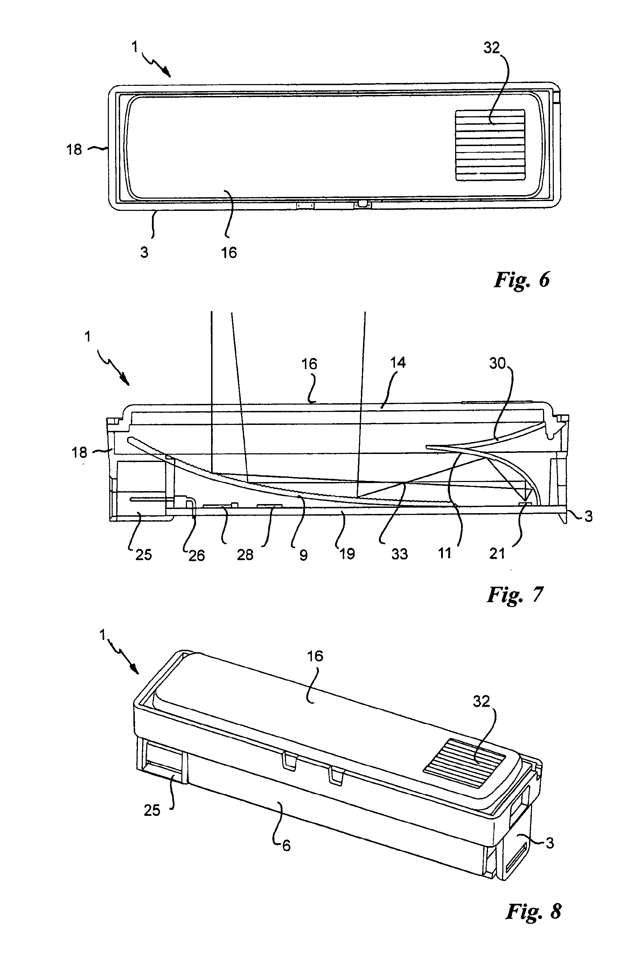

In den Figuren 6 bis 8 ist eine weitere Leuchte 1 dargestellt, die sich von der eben beschriebenen im Wesentlichen dadurch unterscheidet, dass der im Inneren des Gehäuses 3 befindliche Hohlraum 4 über die gesamte Gehäuselänge in etwa die gleiche Höhe besitzt, die Oberseite des Hilfsreflektors 11 also nicht die Außenseite des Gehäuses bildet.

Die Steckeranordnung 25 ist hier in den in den Figuren links dargestellten Bereich des Gehäuses 3 integriert.

Die im rechten Bereich der Lichtscheibe 16 dargestellte, geriffelte, in etwa quadratische Struktur 32 kann als Betätigungsfläche der Leuchte 1 dienen. Die Lichtscheibe 16 kann in diesem Fall (in nicht im Einzelnen dargestellter Weise) an der linken Stirnseite des Gehäuses schwenkbar gelagert sein, so dass ihre rechte kurze Kante nach unten bewegbar ist, um die Leuchte 1 ein- bzw. auszuschalten. Eine Blattfeder 30, die sich mit ihrem linken Ende auf der Oberseite des Hilfsreflektors 11 abstützt, spannt die Lichtscheibe 16 in ihre in Figur 7 gezeigte Ruhelage vor.

Auch der Figur 7 ist deutlich zu entnehmen, dass die Brennlinie 33, auf welche der Hilfsreflektor 11 das von den Leuchtdioden 21 kommende Licht bündelt, zwischen dem Hilfsreflektor 11 und der konkaven Spiegelfläche des Hauptreflektors 9 liegt, so dass sich die Lichtbündel in der für eine homogene Ausleuchtung der Lichtdurchtrittsöffnung 14 erforderlichen Weise aufweiten können.

## Patentansprüche

1. Leuchte (1) für die Innenbeleuchtung eines Fahrzeuges, insbesondere eines Kraftfahrzeuges, die folgende Bestandteile umfasst:
- ein Gehäuse (3), das einen eine Lichtdurchtrittsöffnung (14) aufweisenden Hohlraum (4) umschließt,
- eine im Hohlraum (4) des Gehäuses (3) angeordnete Lichtquelle, und
- eine im Hohlraum (4) des Gehäuses (3) angeordnete Reflektoranordnung, die das Licht der Lichtquelle so reflektiert, dass es durch die Lichtdurchtrittsöffnung (14) des Hohlraums (4) nach außen tritt,
**dadurch gekennzeichnet,**
- **dass** die Reflektoranordnung einen Hauptreflektor (9) und einen Hilfsreflektor (11) umfasst,
- **dass** die Lichtquelle so angeordnet ist, dass ihr Licht im Wesentlichen vollständig auf den Hilfsreflektor (11) trifft und von diesem quer zu seiner bisherigen Ausbreitungsrichtung auf den Hauptreflektor (9) hin umgelenkt wird, und
- **dass** das auf den Hauptreflektor (9) auftreffende Licht von diesem erneut quer zu seiner nunmehrigen Ausbreitungsrichtung so umgelenkt wird, dass es durch die Lichtdurchtrittsöffnung (14) hindurch tritt.

2. Leuchte (1) nach Anspruch 1, **dadurch gekennzeichnet, dass** die gegenseitigen Abstände der Lichtquelle und der beiden Reflektoren (9, 11) sowie die Abbildungseigenschaften der Reflektoren (9, 11) so gewählt sind, dass zumindest nahezu das gesamte von der Lichtquelle kommende Licht durch die Lichtdurchtrittsöffnung (14) hindurch tritt und diese mit einer homogenen Leuchtdichteverteilung ausleuchtet.

3. Leuchte (1) nach Anspruch 1 oder 2, **dadurch gekennzeichnet, dass** der Hauptreflektor (9) eine in Richtung zur Lichtdurchtrittsöffnung (14) hin konkave, reflektierende Oberfläche besitzt und die Divergenz des von der Lichtquelle kommenden Lichtbündels verstärkt.

4. Leuchte (1) nach Anspruch 3, **dadurch gekennzeichnet, dass** die reflektierende Oberfläche des Hilfsreflektors (11) sowohl zur Lichtquelle als auch zum Hauptreflektor (9) hin konkav ausgebildet ist.

5. Leuchte (1) nach Anspruch 4, **dadurch gekennzeichnet, dass** Hilfsreflektor (11) den Lichtkegel in einem vor dem Hauptreflektor (9) liegenden Brennbereich bündelt.

6. Leuchte (1) nach einem der vorhergehenden Ansprüche, **dadurch gekennzeichnet, dass** die Lichtquelle wenigstens eine Leuchtdiode (21) umfasst.

7. Leuchte (1) nach Anspruch 6, **dadurch gekennzeichnet, dass** die Lichtquelle zwei Leuchtdioden (21, 21) umfasst, und dass der Hilfsreflektor (11) zwei zu den Leuchtdioden hin konkave, einstückig miteinander verbundene Kalotten (22, 23) aufweist.

8. Leuchte (1) nach einem der vorhergehenden Ansprüche, **dadurch gekennzeichnet, dass** die Lichtdurchtrittsöffnung (14) von einer transparenten Lichtscheibe (16) überdeckt ist, die den Innenhohlraum des Gehäuses (3) verschließt.

9. Leuchte (1) nach einem der vorhergehenden Ansprüche, **dadurch gekennzeichnet, dass** die Lichtdurchtrittsöffnung (14) die Form eines länglichen Rechtecks besitzt.

10. Leuchte (1) nach Anspruch 9, **dadurch gekennzeichnet, dass** die Lichtscheibe (16) als ebene, in etwa rechteckige Scheibe mit abgerundeten Ecken ausgebildet ist.

11. Leuchte (1) nach einem der vorhergehenden Ansprüche, **dadurch gekennzeichnet, dass** das Gehäuse (3) und die beiden Reflektoren (9, 11) einstückig ausgebildet sind.

12. Leuchte (1) nach einem der vorhergehenden Ansprüche, **dadurch gekennzeichnet, dass** die Lichtscheibe (16) optisch wirksame Strukturen aufweist.

13. Leuchte (1) nach einem der vorhergehenden Ansprüche, **dadurch gekennzeichnet, dass** der Hauptreflektor (9) wahlweise auf der Oberfläche zusätzliche optisch wirksame Strukturen besitzen kann.
